# EUROPEAN PATENT APPLICATION

(11) **EP 4 844 035 A1**
(43) Date of publication of application: **25.11.2026**
(21) Application number: 26179093.5
(22) Date of filing: 18.05.2026
(51) Int. Cl.: C09D 11/38, C09D 11/322

(54) **AQUEOUS INK FOR INKJET RECORDING**

(30) Priority: 23.05.2025 JP 2025086471
(71) Applicant: KYOCERA Document Solutions Inc., Osaka-shi, Osaka 540-8585 (JP)
(72) Inventor: IKETAKI, Kai, Osaka, 540-8585 (JP); WASHINO, Yusuke, Osaka, 540-8585 (JP); KOYAMA, Akinori, Osaka, 540-8585 (JP)
(74) Representative: IPAZ

(57) **Abstract**

An aqueous ink for inkjet recording includes: a pigment; a compound represented by the following general formula (1); a first water-soluble organic solvent; a second water-soluble organic solvent; and water. The first water-soluble organic solvent is formed of at least one selected from predetermined water-soluble organic solvents. The second water-soluble organic solvent has a hydrogen bonding term of an HSP of 16 MPa^{1/2} or more and 22 MPa1/2 or less and a polarity term of the HSP of 6 MPa^{1/2} or more and 10 MPa1/2 or less. A ratio of the compound represented by the general formula (1) to a total content of the compound represented by the general formula (1) and the first water-soluble organic solvent is 10 mass% or more and 80 mass% or less.

HO-(CH₂(CH₃)CHO)ₙ-H (1)

(In the general formula (1), n represents the average number of repetitions of an oxypropylene group and an integer of 3 or more and 17 or less)

## Description

### Field

The present disclosure relates to an aqueous ink for inkjet recording for forming an image on a recording medium.

### Background

Aqueous inks are desired to provide high image density to improve the quality of images formed on recording media such as paper. In this regard, a technology has been known for increasing the image density by blending a specific polymer compound in the aqueous ink.

### Summary

An aqueous ink for inkjet recording according to an embodiment of the present disclosure includes: a pigment; a compound represented by the following general formula (1); a first water-soluble organic solvent; a second water-soluble organic solvent; and water.

The first water-soluble organic solvent is formed of at least one selected from propylene glycol monomethyl ether, propylene glycol monopropyl ether, dipropylene glycol monomethyl ether, dipropylene glycol monopropyl ether, and triethylene glycol monobutyl ether.

The second water-soluble organic solvent has a hydrogen bonding term of a Hansen solubility parameter of 16 MPa^{1/2} or more and 22 MPa^{1/2} or less and a polarity term of the Hansen solubility parameter of 6 MPa^{1/2} or more and 10 MPa1/2 or less.

A ratio of a content of the compound represented by the general formula (1) to a total content of the compound represented by the general formula (1) and the first water-soluble organic solvent is 10 mass% or more and 80 mass% or less.

HO-(CH₂(CH₃)CHO)ₙ-H (1)

(In the general formula (1), n represents the average number of repetitions of an oxypropylene group and an integer of 3 or more and 17 or less)

According to the present disclosure, it is possible to provide an aqueous ink for inkjet recording that is capable of providing high image density.

### Detailed Description

According to the present inventors' research, the aqueous ink in which a polymer compound was blended tended to provide insufficient image density.

In view of the circumstances as described above, it is an object of the present disclosure to provide an aqueous ink for inkjet recording that is capable of providing high image density.

An embodiment of the present disclosure will be described. Note that in the present disclosure, "acrylic" and "methacrylic" will be collectively referred to as "(meth)acrylic", i.e., "(meth)acrylic" includes both "acrylic" and "methacrylic".

### [Configuration of ink]

### (Schematic configuration)

An aqueous ink for inkjet recording according to an embodiment of the present disclosure (hereinafter, also referred to simply as an "ink") is a water-based ink that is ejected from a recording head of an inkjet recording apparatus onto a recording medium to record an image on the recording medium. The recording medium on which an image is to be recorded by the ink according to this embodiment is formed of a hydrophilic fiber such as a cellulose fiber. Examples of such a recording medium include plain paper, copy paper, recycled paper, thin paper, and thick paper. The ink according to this embodiment can be used suitably particularly for printing on plain paper. In the present specification, the plain paper refers to uncoated paper such as woodfree paper. Examples of the plain paper include C² (manufactured by FUJIFILM Business Innovation Corp., registered trademark), Color Copy (manufactured by Mondi plc, registered trademark), Laser Print (manufactured by Hammermill, product name), and Vitality (manufactured by Xerox, product name).

The ink according to this embodiment includes a pigment a, a compound b represented by the following general formula (1), a first water-soluble organic solvent c, a second water-soluble organic solvent d, and water.

HO-(CH₂(CH₃)CHO)ₙ-H (1)

(In the general formula (1), n represents the average number of repetitions of an oxypropylene group and an integer of 3 or more and 17 or less)

The first water-soluble organic solvent c of the ink according to this embodiment is formed of at least one selected from propylene glycol monomethyl ether, propylene glycol monopropyl ether, dipropylene glycol monomethyl ether, dipropylene glycol monopropyl ether, and triethylene glycol monobutyl ether.

The second water-soluble organic solvent d of the ink according to this embodiment has a hydrogen bonding term of a Hansen solubility parameter of 16 MPa^{1/2} or more and 22 MPa1/2 or less and a polarity term of the Hansen solubility parameter of 6 MPa^{1/2} or more and 10 MPa1/2 or less.

In the ink according to this embodiment, the ratio of the content of the compound b to the total content of the compound b and the first water-soluble organic solvent c is 10 mass% or more and 80 mass% or less.

In the ink according to this embodiment, as described above, the compound b, the first water-soluble organic solvent c, and the second water-soluble organic solvent d are used in combination and blended in a well-balanced manner, thereby providing high image density.

Further, in the ink according to this embodiment, from the viewpoint of enhancing the ejection stability, the viscosity at 25°C is favorably 3 mPa·s or more and 10 mPa·s or less, more favorably 4 mPa·s or more and 9 mPa·s or less. In this embodiment, the viscosity of the ink is obtained by a method according to JIS Z 8803:2011 "Methods for viscosity measurement of liquid".

Further, in the ink according to this embodiment, from the viewpoint of enhancing the ejection stability, the dynamic surface tension is favorably 30 mN/m or more and 40 mN/m or less. In this embodiment, the dynamic surface tension refers to surface tension measured at 50 ms by a maximum bubble pressure method. For the measurement of dynamic surface tension by a maximum bubble pressure method, for example, a dynamic surface tensiometer (product name: BP100) manufactured by KRUSS GmbH can be used.

Details of each component of the ink according to this embodiment will be described below.

### (Pigment a)

The ink according to this embodiment includes the pigment a as a coloring agent from the viewpoints of color mixing prevention and improvement in water resistance in images recorded on the recording medium. The pigment a may be either an inorganic pigment or an organic pigment. Further, as the pigment a, these may be combined with an extender pigment as necessary.

Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, the hue is not particularly limited, and a colored pigment of any of colors such as yellow, magenta, cyan, blue, red, orange, and green can be used.

Examples of commercial products of carbon black forming the black pigment include Raven (registered trademark) 5000 Ultra II, Raven 3500, Raven 2000, Raven 1255, Raven 1250, Raven 1200, Raven 1190 Ultra, Raven 1170, Raven 1080 Ultra, and Raven 1060 Ultra (the above are manufactured by Aditya Birla Chemicals, product name); MONARCH (registered trademark) 1300, MONARCH 1000, MONARCH 800, MONARCH 700, MOGUL (registered trademark) L, REGAL (registered trademark) 400R, REGAL 660R, and REGAL 330R (the above are manufactured by Cabot Corporation, product name); MITSUBISHI (registered trademark) Carbon Black #2300, MITSUBISHI Carbon Black #980, MITSUBISHI Carbon Black #970, MITSUBISHI Carbon Black #960, MITSUBISHI Carbon Black #950, MITSUBISHI Carbon Black #900, MITSUBISHI Carbon Black #850, MITSUBISHI Carbon Black MCF88, MITSUBISHI Carbon Black MA600, MITSUBISHI Carbon Black #52, MITSUBISHI Carbon Black #47, MITSUBISHI Carbon Black #45, MITSUBISHI Carbon Black #40, MITSUBISHI Carbon Black #33, MITSUBISHI Carbon Black #25, MITSUBISHI Carbon Black MA7, MITSUBISHI Carbon Black MA8, and MITSUBISHI Carbon Black MA100 (the above are manufactured by Mitsubishi Chemical Corporation, product name); and COLOUR BLACK FW 1, COLOUR BLACK FW 2, COLOUR BLACK FW 200, COLOUR BLACK FW 18, PRINTEX (registered trademark) 80, PRINTEX 85, SPECIAL BLACK 6, COLOUR BLACK S 160, SPECIAL BLACK 5, PRINTEX U, PRINTEX V, SPECIAL BLACK 4, SPECIAL BLACK 4A, PRINTEX 140 U, PRINTEX 140 V, and PRINTEX 35 (the above are manufactured by Orion Engineered Carbons S.A., product name).

Examples of the cyan pigment include C.I. Pigment Blue 1, C.I. Pigment Blue 2, C.I. Pigment Blue 3, C.I. Pigment Blue 15:3, C.I. Pigment Blue 15:4, C.I. Pigment Blue 16, C.I. Pigment Blue 22, C.I. Vat Blue 4, and C.I. Vat Blue 6.

Examples of the magenta pigment include C.I. Pigment Red 5, C.I. Pigment Red 7, C.I. Pigment Red 12, C.I. Pigment Red 48(Ca), C.I. Pigment Red 48 (Mn), C.I. Pigment Red 57(Ca), C.I. Pigment Red 57:1, C.I. Pigment Red 112, C.I. Pigment Red 122, C.I. Pigment Red 123, C.I. Pigment Red 146, C.I. Pigment Red 168, C.I. Pigment Red 184, C.I. Pigment Red 202, and C.I. Pigment Violet 19.

Examples of the yellow pigment include C.I. Pigment Yellow 12, C.I. Pigment Yellow 13, C.I. Pigment Yellow 14, C.I. Pigment Yellow 17, C.I. Pigment Yellow 74, C.I. Pigment Yellow 83, C.I. Pigment Yellow 93, C.I. Pigment Yellow 94, C.I. Pigment Yellow 95, C.I. Pigment Yellow 120, C.I. Pigment Yellow 128, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185.

Examples of the pigment other than the above include C.I. Pigment Green 7, C.I. Pigment Green 10, C.I. Pigment Green 36, C.I. Pigment Brown 3, C.I. Pigment Brown 5, C.I. Pigment Brown 25, C.I. Pigment Brown 26, C.I. Pigment Orange 2, C.I. Pigment Orange 5, C.I. Pigment Orange 7, C.I. Pigment Orange 13, C.I. Pigment Orange 14, C.I. Pigment Orange 15, C.I. Pigment Orange 16, C.I. Pigment Orange 24, C.I. Pigment Orange 34, C.I. Pigment Orange 36, C.I. Pigment Orange 38, C.I. Pigment Orange 40, C.I. Pigment Orange 43, C.I. Pigment Orange 62, C.I. Pigment Orange 63, C.I. Pigment Orange 64, and C.I. Pigment Orange 71.

The pigment a may be used alone, or two or more of them may be used in combination.

In the ink according to this embodiment, from the viewpoint of ensuring ejection stability, the content of the pigment a is favorably 0.1 mass% or more and 15 mass% or less.

### (Compound b represented by general formula (1))

In the ink according to this embodiment, the compound b represented by the general formula (1) is blended to enhance the image density.

HO-(CH₂(CH₃)CHO)ₙ-H (1)

(In the general formula (1), n represents the average number of repetitions of an oxypropylene group and an integer of 3 or more and 17 or less)

In the ink according to this embodiment, the compound b represented by the general formula (1) is blended to enhance the image density. In the ink according to this embodiment, the average number n of repetitions of an oxypropylene group in the compound b is 3 or more and 17 or less, favorably 7 or more and 12 or less. In the ink according to this embodiment, by setting the average number n of repetitions of an oxypropylene group in the compound b to 3 or more, it is easier to provide high image density. Further, in the ink according to this embodiment, by setting the average number n of repetitions of an oxypropylene group in the compound b to 17 or less, the water solubility of the compound b can be ensured.

As the compound b, commercial products can be used.
Examples of commercial products of the compound b include SANNIX (registered trademark) PP-200 (n=3), SANNIX PP-400 (n=7), SANNIX PP-600 (n=10), SANNIX PP-950 (n=16), and SANNIX PP-1000 (n=17) (the above are manufactured by SANYO CHEMICAL INDUSTRIES, LTD., product name); and tripropylene glycol (isomer mixture) (n=3), polypropylene glycol, diol type, 400 (n=7), polypropylene glycol, diol type, 700 (n=12), and polypropylene glycol, diol type, 1000 (n=17) (the above are manufactured by FUJIFILM Wako Pure Chemical Corporation, product name).

In the ink according to this embodiment, the content of the compound b is favorably 2 mass% or more and 16 mass% or less. In the ink according to this embodiment, by setting the content of the compound b to 2 mass% or more, the penetration of the pigment a into the recording medium is suppressed, making it easier to provide high image density. Further, in the ink according to this embodiment, by setting the content of the compound b to 16 mass% or less, it is possible to suppress the occurrence of the undissolved compound b. In the ink according to this embodiment, the compound b may be used alone, or two or more of them may be used in combination.

### (First water-soluble organic solvent c)

In the ink according to this embodiment, the first water-soluble organic solvent c is blended to enhance the image density. The first water-soluble organic solvent c included in the ink according to this embodiment includes at least one selected from propylene glycol monomethyl ether, propylene glycol monopropyl ether, dipropylene glycol monomethyl ether, dipropylene glycol monopropyl ether, and triethylene glycol monobutyl ether.

In the ink according to this embodiment, the content of the first water-soluble organic solvent c is favorably 3 mass% or more and 18 mass% or less. In the ink according to this embodiment, by setting the content of the first water-soluble organic solvent c to 3 mass% or more, the penetration of the pigment a into the recording medium is suppressed, making it easier to provide high image density. Further, in the ink according to this embodiment, by setting the content of the first water-soluble organic solvent c to 18 mass% or less, it is easier to achieve good preservation stability.

In the ink according to this embodiment, the ratio of the content of the compound b to the total content of the compound b and the first water-soluble organic solvent c is 10 mass% or more and 80 mass% or less. As a result, in the ink according to this embodiment, the synergistic effect of the action of the compound b and the action of the first water-soluble organic solvent c makes it easier to provide high image density.

### (Second water-soluble organic solvent d)

In the ink according to this embodiment, the second water-soluble organic solvent d is blended to enhance the image density. The second water-soluble organic solvent d included in the ink according to this embodiment has a hydrogen bonding term (δH) of a Hansen solubility parameter of 16 MPa^{1/2} or more and 22 MPa1/2 or less and a polarity term (δP) of the Hansen solubility parameter of 6 MPa^{1/2} or more and 10 MPa1/2 or less.

In this embodiment, as the Hansen solubility parameter (HSP), those described in Charles M. Hansen, "Hansen Solubility Parameters: A User's Handbook, Second Edition", CRC Press, 2007, and those registered in commercially available software (HSPiP 5th Edition 5.2.06) are used.

In the ink according to this embodiment, from the viewpoint of enhancing the image density, it is favorable that the second water-soluble organic solvent d is formed of at least one selected from 2-methyl-1,3-propanediol (δH=21.2 MPa^{1/2}, δP=9.6 MPa^{1/2}), 3-methyl-1,3-butanediol (δH=16.8 MPa^{1l2}, δP=8.1 MPa^{1/2}), 1,2-pentanediol (δH=17.7 MPa^{1/2}, δP=7.8 MPa^{1/2}), 1,5-pentanediol (δH=18.9 MPa^{1/2}, δP=8.9 MPa^{1/2}), and 3-methyl-1,5-pentanediol (δH=17.4 MPa^{1/2}, δP=8.0 MPa^{1/2}).

In the ink according to this embodiment, the content of the second water-soluble organic solvent d is favorably 2 mass% or more and 18 mass% or less. In the ink according to this embodiment, by setting the content of the second water-soluble organic solvent d to 2 mass% or more, the penetration of the pigment a into the recording medium is suppressed, making it easier to provide high image density. Further, in the ink according to this embodiment, by setting the content of the second water-soluble organic solvent d to 18 mass% or less, it is easier to achieve good preservation stability.

### (Different water-soluble organic solvent e)

The ink according to this embodiment may include a water-soluble organic solvent e other than the first water-soluble organic solvent c and the second water-soluble organic solvent d. Examples of such a water-soluble organic solvent e include 1,2-propanediol, 1,3-propanediol, dipropylene glycol, glycerin, and 2-pyrrolidone.

### (Pigment dispersion resin)

In the ink according to this embodiment, it is favorable to blend a pigment dispersion resin as a dispersant for enhancing the dispersibility of the pigment a in the solvent. Note that in the ink according to this embodiment, the dispersant such as a pigment dispersion resin does not necessarily need to be blended and the pigment a may be dispersed alone in the solvent.

In the ink according to this embodiment, from the viewpoint of achieving high dispersion stability of the pigment a, it is favorable to use those having an acid group as a pigment dispersion resin, more favorably those having an acid group and an aromatic group. Examples of the acid group that the pigment dispersion resin has include a carboxy group, a phosphoric acid group, and a sulfo group. Of these, a carboxy group is favorable.

Examples of the pigment dispersion resin having an acid group and an aromatic group include a styrene-(meth)acrylic acid copolymer, a styrene-(meth)acrylic acid-(meth)acrylic acid ester copolymer, a styrene-α-methylstyrene-(meth)acrylic acid copolymer, a styrene-α-methylstyrene-(meth)acrylic acid-(meth)acrylic acid ester copolymer, a styrene-maleic acid copolymer, a styrene-maleic anhydride copolymer, and a vinyl naphthalene-(meth)acrylic acid copolymer. Of these, it is favorable to use a styrene-(meth)acrylic acid copolymer, a styrene-(meth)acrylic acid-(meth)acrylic acid ester copolymer, a styrene-α-methylstyrene-(meth)acrylic acid copolymer, and a styrene-α-methylstyrene-(meth)acrylic acid-(meth)acrylic acid ester copolymer. The pigment dispersion resin may be used alone, or two or more of them may be used in combination.

The pigment dispersion resin included in the ink according to this embodiment may be a random copolymer, a block copolymer, or a graft copolymer.

The acid value of the pigment dispersion resin included in the ink according to this embodiment is favorably 50 mg KOH/g or more and 400 mg KOH/g or less, more favorably 100 mg KOH/g or more and 300 mg KOH/g or less. The acid value of the pigment dispersion resin can be obtained by, for example, a method according to JIS K 0070:1992 "Test methods for acid value, saponification value, ester value, iodine value, hydroxyl value and unsaponifiable matter of chemical products".

The mass average molecular weight of the pigment dispersion resin included in the ink according to this embodiment is favorably 3000 or more and 30000 or less, more favorably 4000 or more and 25000 or less, still more favorably 5000 or more and 20000 or less. In the ink according to this embodiment, by setting the mass average molecular weight of the pigment dispersion resin to 3000 or more, it is easier to provide favorable dispersion stability of the pigment a. Further, in the ink according to this embodiment, by setting the mass average molecular weight of the pigment dispersion resin to 30000 or less, it is easier to provide favorable ejection stability. Note that in this embodiment, the mass average molecular weight refers to a mass average molecular weight in terms of polystyrene measured by gel permeation chromatography.

The pigment dispersion resin is favorably neutralized with a basic compound. Examples of the basic compound include, but not particularly limited to, lithium hydroxide, sodium hydroxide, potassium hydroxide, calcium hydroxide, barium hydroxide, ammonia, trimethylamine, triethylamine, 2-(dimethylamino)ethanol, 2-(diethylamino)ethanol, triethanolamine, and 2-amino-2-methyl-1-propanol. The basic compound may be used alone, or two or more of them may be used in combination.

The neutralization degree of the pigment dispersion resin included in the ink according to this embodiment is favorably 20% or more and 100% or less, more favorably 40% or more and 90% or less. In this embodiment, the neutralization degree refers to the ratio of the equivalent of the basic compound to the equivalent of the acid group of the pigment dispersion resin. The neutralization degree is calculated by the following formula. 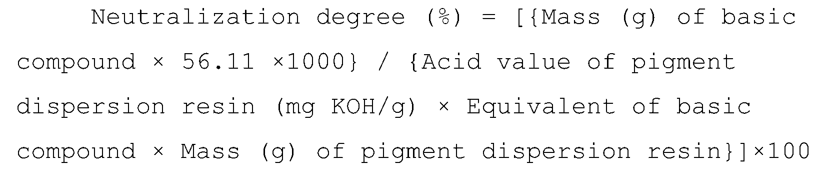 Neutralization degree (%) = [{Mass (g) of basic compound × 56.11 ×1000} / {Acid value of pigment dispersion resin (mg KOH/g) × Equivalent of basic compound × Mass (g) of pigment dispersion resin}]×100

In the ink according to this embodiment, in order to adjust the viscosity to a range suitable for inkjet recording, the ratio of the mass of the pigment dispersion resin to the mass of the pigment a is favorably 0.10 or more and 0.55 or less, more favorably 0.25 or more and 0.50 or less, still more favorably 0.30 or more and 0.45 or less. In the ink according to this embodiment, by setting the ratio of the mass of the pigment dispersion resin to the mass of the pigment a to 0.10 or more, it is easier to achieve the effect of dispersing the pigment a in the solvent by the pigment dispersion resin well.

### (Water)

In the ink according to this embodiment, as water, for example, ion exchanged water (deionized water), purified water, or distilled water can be used, and ion exchanged water (deionized water) is favorably used. In the ink according to this embodiment, from the viewpoints of dryness and ejection reliability, the content of water is favorably 55 mass% or more and 80 mass% or less.

### (Other components)

In the ink according to this embodiment, components other than the above may be blended as necessary. For example, a surfactant may be blended in the ink according to this embodiment. Examples of the surfactant include an acetylene glycol surfactant, an acrylic surfactant, and a silicone surfactant. Commercial products can be used as the surfactant.

Examples of commercial products of the acetylene glycol surfactant include SURFYNOL (registered trademark) 420, SURFYNOL 440, and SURFYNOL 465 (the above are manufactured by Evonik Industries AG, product name); and OLFINE (registered trademark) E1010, OLFINE EXP.4200, OLFINE EXP.4300, and OLFINE PD-002W (the above are manufactured by Nissin Chemical Co., Ltd., product name).

Examples of commercial products of the acrylic surfactant include BYK (registered trademark)-380N, BYK-381, and BYK-3441 (the above are manufactured by BYK Japan KK, product name); and POLYFLOW KL-850 (manufactured by KYOEISHA CHEMICAL Co., LTD., product name).

Examples of commercial products of the silicone surfactant include BYK-333, BYK-347, and BYK-348 (the above are manufactured by BYK Japan KK, product name); KF-353, KF-355A, and KF-642 (the above are manufactured by Shin-Etsu Chemical Co., Ltd., product name); and SILFACE (registered trademark) SAG002, SILFACE SAG005, and SILFACE SAG503A (the above are manufactured by Nissin Chemical Co., Ltd., product name).

The surfactant may be used alone, or two or more of them may be used in combination.

In the ink according to this embodiment, in order to adjust the dynamic surface tension to a range suitable for inkjet recording, the surfactant is favorably 0.05 mass% or more and 2 mass% or less.

Further, various additives other than the surfactant, such as a pH adjuster, a chelating agent, a preservative, and an antifungal agent, may be blended in the ink according to this embodiment, as necessary.

### [Examples and Comparative Examples]

As Examples and Comparative Examples of the present disclosure, inks were prepared and evaluated.

### (Preparation of ink)

First, a pigment dispersion liquid p1 was prepared. For preparing the pigment dispersion liquid p1, a potassium hydroxide neutralized product of a copolymer of 22.2 parts by mass of styrene, 44.4 parts by mass of α-methylstyrene, 27.8 parts by mass of methacrylic acid, and 5.6 parts by mass of 2-hydroxyethyl acrylate (a mass average molecular weight: 9100, an acid value: 200 mg KOH/g) was prepared as a pigment dispersion resin 1. Then, 20 parts by mass of carbon black, 30 parts by mass of a 20mass% aqueous solution of the pigment dispersion resin 1, and 50 parts by mass of ion exchanged water were mixed and stirred, and then dispersed using a bead mill filled with zirconia beads having a diameter of 0.1 mm. Subsequently, after removing coarse particles by centrifugation, the mixture was filtered using a membrane filter with a pore size of 5 µm, and ion exchanged water was added thereto, thereby obtaining the pigment dispersion liquid p1 with a pigment concentration of 15 mass%.

Next, a pigment dispersion liquid p2 was prepared. For preparing the pigment dispersion liquid p2, a potassium hydroxide neutralized product of a copolymer of 29.4 parts by mass of styrene, 29.4 parts by mass of α-methylstyrene, 39.2 parts by mass of methacrylic acid, and 2.0 parts by mass of 2-hydroxyethyl acrylate (a mass average molecular weight: 6900, an acid value: 250 mg KOH/g) was prepared as a pigment dispersion resin 2. Then, 20 parts by mass of carbon black, 20 parts by mass of a 30mass% aqueous solution of the pigment dispersion resin 2, and 60 parts by mass of ion exchanged water were mixed and stirred, and then dispersed using a bead mill filled with zirconia beads having a diameter of 0.1 mm. Subsequently, after removing coarse particles by centrifugation, the mixture was filtered using a membrane filter with a pore size of 5 µm, and ion exchanged water was added thereto, thereby obtaining the pigment dispersion liquid p2 with a pigment concentration of 15 mass%.

In Examples and Comparative Examples, as the compound b, the following compounds b1 to b4 were used.
·Compound b1: n=3 (manufactured by FUJIFILM Wako Pure Chemical Corporation, product name: tripropylene glycol (isomer mixture))
·Compound b2: n=7 (manufactured by FUJIFILM Wako Pure Chemical Corporation, product name: polypropylene glycol, diol type, an average molecular weight: 400)
·Compound b3: n=12 (manufactured by FUJIFILM Wako Pure Chemical Corporation, product name: polypropylene glycol, diol type, an average molecular weight: 700)
·Compound b4: n=17 (manufactured by FUJIFILM Wako Pure Chemical Corporation, product name: polypropylene glycol, diol type, an average molecular weight: 1000)

In Examples and Comparative Examples, as the first water-soluble organic solvent c, the following water-soluble organic solvents c1 to c5 were used.
·Water-soluble organic solvent c1: propylene glycol monomethyl ether (δH=11.6 MPa^{1/2}, δP=6.3 MPa^{1/2})
·Water-soluble organic solvent c2: propylene glycol monopropyl ether (δH=9.2 MPa^{1/2}, δP=7 MPa^{1/2})
·Water-soluble organic solvent c3: dipropylene glycol monomethyl ether (δH=9.9 MPa^{1/2}, δP=6.4 MPa^{1/2})
·Water-soluble organic solvent c4: dipropylene glycol monopropyl ether (δH=11 MPa^{1/2}, δP=6.1 MPa^{1/2})
·Water-soluble organic solvent c5: triethylene glycol monobutyl ether (δH=9.1 MPa^{1/2}, δP=6.1 MPa^{1/2})

In Examples and Comparative Examples, as the second water-soluble organic solvent d, the following water-soluble organic solvents d1 to d5 were used.
·Water-soluble organic solvent d1: 2-methyl-1,3-propanediol (δH=21.1 MPa^{1/2}, δP=9.6 MPa^{1/2})
·Water-soluble organic solvent d2: 3-methyl-1,3-butanediol (δH=16.8 MPa^{1/2}, δP=8.1 MPa^{1/2})
·Water-soluble organic solvent d3: 1,2-pentanediol (δH=17.7 MPa^{1/2}, δP=7.8 MPa^{1/2})
·Water-soluble organic solvent d4: 1,5-pentanediol (δH=18.9 MPa^{1/2}, δP=8.9 MPa^{1/2})
·Water-soluble organic solvent d5: 3-methyl-1,5-pentanediol (δH=17.4 MPa^{1/2}, δP=8.0 MPa^{1/2})

In Examples and Comparative Examples, as the different water-soluble organic solvent e, the following water-soluble organic solvents e1 and e2 were used.
·Water-soluble organic solvent e1: 1,2-propanediol (δH=21.3 MPa^{1/2}, δP=10.4 MPa^{1/2})
·Water-soluble organic solvent e2: 1,3-propanediol (δH=23.2 MPa^{1/2}, δP=13.5 MPa^{1/2})

In Examples and Comparative Examples, as the surfactant, an acetylene glycol surfactant (manufactured by Evonik Industries AG, product name: SURFYNOL 440) was used.

In Examples 1 to 16 and Comparative Examples 1 to 3, each component was mixed such that the composition shown in Tables 1 to 5 was achieved, and then, the mixture was filtered using a membrane filter with a pore size of 5 µm to prepare an ink. Table 1 to Table 5 also show the ratio of the content of the compound b to the total content of the compound b and the first water-soluble organic solvent c. Further, the units of the numerical values shown in Table 1 to Table 5 are "mass%".

**(Table 1)**

| | | | Example | | | | |
|---|---|---|---|---|---|---|---|
| | | | 1 | 2 | 3 | 4 | 5 |
| Component | Pigment dispersion liquid | p1 | 56 | 56 | 56 | 56 | 56 |
| | Compound | b2 | 8 | 8 | 8 | 8 | 8 |
| | First water-soluble organic solvent | c1 | 12 | | | | |
| | | c2 | | 12 | | | |
| | | c3 | | | 12 | | |
| | | c4 | | | | 12 | |
| | | c5 | | | | | 12 |
| | Second water-soluble organic solvent | d5 | 4 | 4 | 4 | 4 | 4 |
| | Surfactant | | 0.4 | 0.4 | 0.4 | 0.4 | 0.4 |
| | Ion exchanged water | | Remainder | Remainder | Remainder | Remainder | Remainder |
| Ratio of compound b | | | 40 | 40 | 40 | 40 | 40 |

**(Table 2)**

| | | | Example | | | | |
|---|---|---|---|---|---|---|---|
| | | | 6 | 7 | 8 | 9 | 10 |
| Component | Pigment dispersion liquid | p1 | 56 | 56 | | 56 | 56 |
| | | p2 | | | 56 | | |
| | Compound | b1 | 8 | | | | |
| | | b2 | | | 8 | | 16 |
| | | b3 | | 8 | | | |
| | | b4 | | | | 2 | |
| | First water-soluble organic solvent | c3 | 12 | 12 | 12 | 18 | 4 |
| | Second water-soluble organic solvent | d5 | 4 | 4 | 4 | 4 | 4 |
| | Surfactant | | 0.4 | 0.4 | 0.4 | 0.4 | 0.4 |
| | Ion exchanged water | | Remainder | Remainder | Remainder | Remainder | Remainder |
| Ratio of compound b | | | 40 | 40 | 40 | 10 | 80 |

**(Table 3)**

| | | | Example | | | |
|---|---|---|---|---|---|---|
| | | | 11 | 12 | 13 | 14 |
| Component | Pigment dispersion liquid | p1 | 56 | 56 | 56 | 56 |
| | Compound | b2 | 8 | 8 | 8 | 8 |
| | First water-soluble organic solvent | c3 | 12 | 12 | 12 | 12 |
| | Second water-soluble organic solvent | d1 | 4 | | | |
| | | d2 | | 4 | | |
| | | d3 | | | 4 | |
| | | d4 | | | | 4 |
| | Surfactant | | 0.4 | 0.4 | 0.4 | 0.4 |
| | Ion exchanged water | | Remainder | Remainder | Remainder | Remainder |
| Ratio of compound b | | | 40 | 40 | 40 | 40 |

**(Table 4)**

| | | | Example | |
|---|---|---|---|---|
| | | | 15 | 16 |
| Component | Pigment dispersion liquid | p1 | 56 | 56 |
| | Compound | b2 | 8 | |
| | | b4 | | 3 |
| | First water-soluble organic solvent | c3 | 12 | 3 |
| | Second water-soluble organic solvent | d5 | 2 | 18 |
| | Different water-soluble organic solvent | e2 | 2 | |
| | Surfactant | | 0.4 | 0.4 |
| | Ion exchanged water | | Remainder | Remainder |
| Ratio of compound b | | | 40 | 50 |

**(Table 5)**

| | | | Comparative Example | | |
|---|---|---|---|---|---|
| | | | 1 | 2 | 3 |
| Component | Pigment dispersion liquid | p1 | 56 | 56 | 56 |
| | Compound | b2 | | | 8 |
| | First water-soluble organic solvent | c3 | 12 | 12 | |
| | Second water-soluble organic solvent | d5 | 4 | 4 | |
| | Different water-soluble organic solvent | e1 | 8 | | |
| | | e2 | | 8 | 16 |
| | Surfactant | | 0.4 | 0.4 | 0.4 |
| | Ion exchanged water | | Remainder | Remainder | Remainder |
| Ratio of compound b | | | 0 | 0 | 100 |

In the inks according to Examples 1 to 5, the type of first water-soluble organic solvent c was varied as shown in Table 1. In the inks according to Examples 6 to 10, the types of pigment dispersion liquid and compound b, and the amounts of the compound b and the first water-soluble organic solvent c were varied as shown in Table 2. In the inks according to Examples 11 to 14, the type of second water-soluble organic solvent d was varied as shown in Table 3. In Examples 15 and 16, the amounts of the compound b, the first water-soluble organic solvent c, and the second water-soluble organic solvent d were varied as shown in Table 4.

In the inks according to Comparative Examples 1 and 2, as shown in Table 5, the compound b was not blended, unlike the above Examples. In the ink according to Comparative Example 3, as shown in Table 5, the first water-soluble organic solvent c and the second water-soluble organic solvent d were not blended, unlike the above Examples.

### (Method of evaluating ink)

For the inks according to Examples 1 to 16 and Comparative Examples 1 to 3, the image density was evaluated. In the evaluation of image density, the following recording media m1 and m2 were used.
·Recording medium m1: C² (manufactured by FUJIFILM Business Innovation Corp., basis weight: 70g/m²)
·Recording medium m2: Color Copy (manufactured by Mondi plc, basis weight: 90g/m²)

In the evaluation of image density, first, a recording head of an inkjet recording apparatus (manufactured by KYOCERA Corporation, product name: KJ4B-QA, resolution: 600 dpi × 600 dpi) was filled with ink, the ink ejection amount was set to 11 pL, and a solid image was formed on each of the recording media m1 and m2. The image density of the solid image dried by being allowed to stand for 24 hours at room temperature was measured using a spectrodensitometer (manufactured by Konica Minolta, Inc., product name: FD-5). The image density of each ink was evaluated in accordance with the following criteria A, B, and C. Inks with the evaluation of A or B for image density are evaluated to "Pass" and inks with the evaluation of C are evaluated to "Fail".
A (Good): 1.18 or more
B (Acceptable): 1.14 or more and less than 1.18
C (Poor): less than 1.14

### (Evaluation results of ink)

Table 6 shows the evaluation results of image density for the inks according to Examples 1 to 16 and Comparative Examples 1 to 3. As shown in Table 6, in all of the inks according to Examples 1 to 16, the image density was evaluated to "Pass" regardless of whether the recording medium m1 or m2 was used. On the other hand, in all of the inks according to Comparative Examples 1 to 3, the image density was evaluated to "Fail" when the recording medium m1 was used. Further, regardless of whether the recording medium m1 or m2 is used, the image density of the inks according to Examples 1 to 16 was evaluated to be higher than that of the inks according to Comparative Examples 1 to 3.

**(Table 6)**

| | | Image density evaluation | |
|---|---|---|---|
| Recording medium | | m1 | m2 |
| Example | 1 | B | A |
| | 2 | B | A |
| | 3 | B | A |
| | 4 | B | A |
| | 5 | B | A |
| | 6 | B | A |
| | 7 | B | A |
| | 8 | B | A |
| | 9 | B | A |
| | 10 | B | A |
| | 11 | B | A |
| | 12 | B | A |
| | 13 | B | A |
| | 14 | B | A |
| | 15 | B | A |
| | 16 | B | A |
| Comparative Example | 1 | C | B |
| | 2 | C | B |
| | 3 | C | B |

## Claims

1. An aqueous ink for inkjet recording, comprising:
a pigment;
a compound represented by the following general formula (1);
a first water-soluble organic solvent formed of at least one selected from propylene glycol monomethyl ether, propylene glycol monopropyl ether, dipropylene glycol monomethyl ether, dipropylene glycol monopropyl ether, and triethylene glycol monobutyl ether;
a second water-soluble organic solvent having a hydrogen bonding term of a Hansen solubility parameter of 16 MPa^{1/2} or more and 22 MPa1/2 or less and a polarity term of the Hansen solubility parameter of 6 MPa^{1/2} or more and 10 MPa1/2 or less; and
water,
a ratio of a content of the compound represented by the general formula (1) to a total content of the compound represented by the general formula (1) and the first water-soluble organic solvent being 10 mass% or more and 80 mass% or less.
HO-(CH₂(CH₃)CHO)ₙ-H (1)
(wherein, in the general formula (1), n represents the average number of repetitions of an oxypropylene group and an integer of 3 or more and 17 or less)

2. The water-based ink for inkjet according to claim 1, wherein
the content of the compound represented by the following general formula (1) is 2 mass% or more and 16 mass% or less.

3. The water-based ink for inkjet according to claim 1 or 2, wherein
the second water-soluble organic solvent is formed of at least one selected from 2-methyl-1,3-propanediol, 3-methyl-1,3-butanediol, 1,2-pentanediol, 1,5-pentanediol, and 3-methyl-1,5-pentanediol.
